(19) **Europäisches Patentamt**
**European Patent Office**
**Office européen des brevets**

(11) **EP 1 879 756 B1**

(12) **FASCICULE DE BREVET EUROPEEN**

(45) Date de publication et mention
de la délivrance du brevet:
**29.12.2010 Bulletin 2010/52**

(21) Numéro de dépôt: **06754823.0**

(22) Date de dépôt: **24.04.2006**

(51) Int Cl.:
***B60C 23/04*** *(2006.01)*

(86) Numéro de dépôt international:
**PCT/EP2006/061796**

(87) Numéro de publication internationale:
**WO 2006/117310 (09.11.2006 Gazette 2006/45)**

(54) **PROCÉDÉ DE CONTRÔLE DE LA PRESSION ET D'ASSISTANCE AU GONFLAGE D'UN PNEUMATIQUE D'UNE ROUE D'UN VÉHICULE**

**VERFAHREN ZUR DRUCKÜBERWACHUNG UND AUFPUMPHILFE FÜR EINEN FAHRZEUGREIFEN**

**METHOD FOR MONITORING THE PRESSURE AND ASSISTING IN THE INFLATION OF A TIRE OF A VEHICLE WHEEL**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.05.2005 FR 0504539**

(43) Date de publication de la demande:
**23.01.2008 Bulletin 2008/04**

(73) Titulaires:
• **Societe de Technologie Michelin**
**63000 Clermont-Ferrand (FR)**
• **Michelin Recherche et Technique S.A.**
**1763 Granges-Paccot (CH)**
• **TRW Automotive U.S. LLC**
**Livonia,**
**Michigan 48150 (US)**

(72) Inventeur: **CORNIOT, Philippe**
**F-63530 Enval (FR)**

(74) Mandataire: **Dequire, Philippe Jean-Marie Denis**
**23, Place des Carmes-Déchaux**
**SGD/LG/PI F35 Ladoux**
**63040 Clermont-Ferrand Cedex 09 (FR)**

(56) Documents cités:
**GB-A- 2 406 947**

• **PATENT ABSTRACTS OF JAPAN vol. 2003, no. 12, 5 décembre 2003 (2003-12-05) & JP 2005 008109 A (YOKOHAMA RUBBER CO LTD:THE), 13 janvier 2005 (2005-01-13)**

**Description**

La présente invention concerne un procédé de contrôle de la pression et d'assistance au gonflage d'un pneumatique d'une roue d'un véhicule ainsi qu'un dispositif pour la mise en oeuvre du procédé.

Pour obtenir les meilleures performances, qui résultent usuellement d'un compromis entre usure, adhérence et confort, et qui conditionnent une bonne tenue de route, un bon freinage, une bonne suspension, un faible niveau de bruit de roulement, un bon amortissement des vibrations..., l'ensemble véhicule/roue/pneu doit travailler à des pressions ayant des valeurs très proches des valeurs de consigne de pression préconisées pour le gonflage des pneumatiques. Ces valeurs de consigne de pression sont généralement fixées par un accord entre les constructeurs de véhicules automobiles et les fabricants de pneumatiques pour correspondre à un ensemble donné véhicule/roue/pneu pour des conditions données de masse, vitesse et stabilité, et pour des pneus froids, c'est-à-dire sans échauffement dû au roulage. Un roulage continu avec des pneumatiques sous gonflés peut conduire à une diminution des performances des pneumatiques, telles que la résistance au roulement, l'endurance, le confort, etc. Inversement, des pneumatiques sur gonflés peuvent conduire à une dégradation de l'adhérence des pneumatiques et du confort du véhicule et à une accélération de l'usure des pneumatiques. Comme un mauvais gonflage des pneumatiques peut conduire à des conséquences non négligeables, les constructeurs automobiles et les fabricants de pneumatiques recommandent généralement que la pression des pneumatiques soit maintenue dans une plage étroite de pression, généralement inférieure à 10 pour cent de la valeur de consigne préconisée, soit, pour une valeur de consigne préconisée de 2 bars, une différence maximum de pression de l'ordre de 200 millibars par rapport à ladite valeur de consigne.

Lors d'une opération de gonflage à l'aide d'une machine de gonflage installée en libre service dans une station de distribution d'essence ou un supermarché, les conducteurs ne tiennent en général pas compte de l'état des pneumatiques de leur véhicule ou, quand ils veulent en tenir compte, ils rencontrent des difficultés. En effet, des sondages ont montré que :

-   les conducteurs ajustent rarement à froid la pression des pneumatiques de leur véhicule ; généralement, ils parcourent plusieurs kilomètres avant de s'arrêter à une station de gonflage et ils ne savent pas s'il est nécessaire de tenir compte d'un échauffement des pneumatiques et, le cas échéant, dans quelle proportion il doit en être tenu compte ;
-   il arrive aux conducteurs de contrôler les pressions après ou pendant un long trajet ;
-   les conducteurs ne peuvent pas tenir compte des différences de température entre des pneus qui ont été exposés au soleil et des pneus qui sont restés à l'ombre, et/ou tenir compte des différences d'échauffement entre les pneumatiques appartenant aux essieux avant et arrière ;
-   pendant les périodes froides (automne, hiver et printemps) les conducteurs ajustent la pression des pneumatiques de leur véhicule plutôt en milieu ou en fin de journée, donc à un moment où la température ambiante est usuellement plus élevée qu'en début de journée ;
-   il arrive souvent que les conducteurs n'ajustent la pression des pneumatiques de leur véhicule qu'une fois par an, à l'occasion d'un départ en vacances de longue durée, généralement en été, donc à une période où la température ambiante est relativement élevée.

Dans de nombreux cas, il arrive donc que le gonflage des pneumatiques soit effectué à un moment où les pneumatiques sont dans un état chaud. Dans ce cas, si la pression des pneumatiques est ajustée à la valeur de consigne préconisée par le constructeur du véhicule automobile, les pneumatiques pourront être sous gonflés. Il peut même arriver que, si les pneumatiques ont été fortement échauffés, le conducteur constate que la pression est plus élevée que la valeur de consigne préconisée par le constructeur et que, voyant cela, le conducteur dégonfle les pneumatiques alors qu'ils étaient à une pression correcte ou qu'ils auraient dû être regonflés si la pression avait été mesurée à froid. Dans ce dernier cas, il peut en résulter que les pneus sont ou deviennent nettement sous gonflés sans que le conducteur le sache, ce qui peut avoir de multiples conséquences, telles que celles indiquées plus haut.

Lorsque les conducteurs font appel à un professionnel dans une station service pour le gonflage des pneumatiques de leur véhicule, le plus souvent le professionnel applique une solution radicale consistant à gonfler systématiquement les pneumatiques en ajoutant 0,3 à 0,4 bar, ou plus, à la valeur de consigne préconisée par le constructeur. Une telle solution n'est pas non plus satisfaisante car elle peut conduire à un gonflage exagéré des pneumatiques et à des performances dégradées, notamment du point de vue de l'usure des pneumatiques et du confort du véhicule.

On connaît des véhicules automobiles dont les roues sont munies d'un système de surveillance de pression, couramment appelé système TPMS (abréviation de l'expression anglaise Tyre Pressure Monitoring System signifiant Système de surveillance de la pression des pneus). Les systèmes TPMS comprennent généralement un capteur de pression et/ou un détecteur de variation de pression, ainsi qu'un module de gestion susceptible de recevoir et de traiter des informations fournies par le capteur de pression et/ou le détecteur de variation de pression et un module émetteur pour transmettre à un récepteur indépendant de la roue les informations analysées et traitées par le module de gestion (voir notamment les demandes internationales de brevet publiées sous les n° WO 02/34551, WO 02/34552 et WO 02/34553). Selon le cas, les informations transmises au récepteur sont utilisées pour avertir le conducteur d'une automobile d'une anomalie, comme par exemple une pression insuffisante à l'intérieur de la cavité du pneumatique, une crevaison, une perte rapide de pression, un éclatement, etc.

Même avec les véhicules équipés d'un système TPMS, le contrôle d'un gonflage correct des pneumatiques et le gonflage lui-même ne sont pas aisés. En effet, le seuil de déclenchement de l'alarme des systèmes TPMS n'est usuellement pas très éloigné de la valeur de consigne préconisée par le constructeur pour la pression de gonflage, par exemple de -300 à -400 millibars. Il en résulte que si un conducteur réajuste la pression des pneumatiques de son véhicule dans l'après-midi, par exemple après son travail, alors que la température ambiante est d'environ 20°C, et après avoir roulé quelque peu, entraînant ainsi un échauffement des pneumatiques d'au moins 10°C en plus de la température ambiante, soit au total une température des pneumatiques d'au moins 30°C, le lendemain matin, à froid, si la température ambiante est par exemple de 0°C, la pression des pneumatiques aura facilement baissé d'au moins 300 millibars en dessous de la pression ajustée par le conducteur lors du gonflage effectué dans l'après-midi de la veille, c'est-à-dire que les pneumatiques pourront être à une pression très proche du seuil de déclenchement de l'alarme. L'alarme peut donc se déclencher et, si cela se produit, le conducteur réajustera la pression des pneumatiques selon son habitude, le plus souvent dans l'après-midi après son travail, de sorte que le même phénomène pourra éventuellement se reproduire le lendemain matin et les jours suivants sans que le conducteur comprenne le phénomène. Il en résulte chez le conducteur une certaine incompréhension et/ou lassitude. En revanche, si le conducteur a fait réajuster la pression des pneumatiques par un professionnel qui a trop largement sur gonflé les pneumatiques, le système TPMS n'émet pas nécessairement une alarme, mais cette situation n'est pas non plus satisfaisante, car elle peut amener les pneumatiques à fonctionner en dehors des conditions pour lesquelles ils ont été prévus.

Les documents GB 2 406 947 et JP 2005 008109 A, sur lequel reposent, les termes du préambule de la revendication 1, divulguent des procédés implémentant des corrections de pressions mesurée par des températures mesurées.

La présente invention a donc pour but de résoudre les problèmes sus indiqués en fournissant un procédé permettant de gonfler et de contrôler le plus correctement possible un pneumatique d'une roue de véhicule même si le pneumatique est chaud ou a roulé sur un long trajet avant que sa pression soit réajustée, et cela quel que soit le moment de la journée où le réajustement de la pression est effectué.

A cet effet, la présente invention a pour objet un procédé de contrôle de la pression et d'assistance au gonflage à une pression correcte d'un pneumatique d'une roue d'un véhicule équipé d'un dispositif propre au véhicule pour le contrôle de la pression de gonflage des pneumatiques comportant des dispositifs de détection de la pression et de la température associés aux différents pneumatiques du véhicule et des moyens d'analyse desdites valeurs de pression et de température. Ce procédé est caractérisé en ce que les moyens d'analyse comparent la valeur actuelle de la pression de gonflage du pneumatique à une pression de consigne corrigée en fonction de la température du pneumatique fournie par le dispositif de détection de la température du pneumatique concerné et correspondant à une température de référence fonction des températures mesurées lors des derniers démarrages du véhicule.

De préférence la pression de consigne corrigée est donnée par la formule :

$$P_{cc} = P_c \cdot \frac{T_p}{T_{ref}}$$

dans laquelle $P_c$ est la valeur de consigne nominale de la pression de gonflage du pneumatique concerné, $P_{cc}$ est ladite valeur de consigne corrigée pour la pression de gonflage, $T_p$ est la température du pneumatique fournie par le capteur de température, et $T_{ref}$ est la température variable de référence qui est choisie comme étant une température fonction des températures mesurées lors des derniers démarrage dudit véhicule ; les pressions $P_c$ et $P_{cc}$ étant en valeur absolue et les températures $T_p$ et $T_{ref}$ étant en degré K.

La pression de consigne $P_c$ est la pression de consigne nominale à froid fournie par le constructeur du véhicule considéré. La pression de consigne corrigée a l'avantage de prendre en compte la température réelle du pneumatique, c'est-à-dire la température de la cavité interne définie par le pneumatique et la jante de la roue. Ce procédé est donc applicable que le pneumatique soit dans un état chaud ou un état froid. La correction utilise aussi une température de référence $T_{ref}$. Cette température est fonction des températures précédemment mesurées et enregistrées par le système de contrôle lors des derniers démarrages du véhicule. Cela permet de prendre en compte les variations climatiques liées aux derniers jours et donc d'éviter les inconvénients cités précédemment.

Selon un mode de réalisation particulier, la température fonction des températures mesurées lors des derniers démarrages dudit véhicule correspond à la température minimale parmi les n dernières températures mémorisées. La valeur de n est avantageusement comprise entre trois et dix et de préférence de l'ordre de cinq.

Chaque température mémorisée peut être la moyenne des températures mesurées par les dispositifs de détection de la température des pneumatiques du véhicule, chaque démarrage considéré du véhicule est alors un démarrage dit « à froid », c'est-à-dire que le temps d'arrêt du véhicule a été supérieur à deux heures dans le cas de véhicules de tourisme.

Lorsque le véhicule est équipé d'un capteur de température ambiante, chaque température mémorisée peut être fournie par ce capteur de température ambiante.

Lorsque le dispositif de contrôle de la pression de gonflage des pneumatiques comporte un dispositif de mesure de la pression atmosphérique, la valeur de consigne corrigée P'$_{cc}$, en valeur relative, peut être calculée par la formule :

$$P'_{cc} = (P'_c + P_{atm})[(t_p + 273)/(t_{ref} + 273)] - P_{atm}$$

dans laquelle P'$_c$ est la valeur de consigne, en valeur relative, pour la pression de gonflage, P$_{atm}$ est la valeur de la pression atmosphérique mesurée, t$_p$ et t$_{ref}$ sont la température du pneumatique et la température variable de référence en degrés C.

Lorsque le système de contrôle de la pression comporte des moyens de dialogue avec le conducteur du véhicule, le procédé selon l'invention peut en outre comporter une étape complémentaire dans laquelle, une information complémentaire est fournie par l'opérateur aux moyens d'analyse indiquant l'état de charge du véhicule. Cette information complémentaire est alors prise en compte pour définir la pression de consigne (P$_c$) pour la pression de gonflage à utiliser pour le calcul de la valeur de consigne corrigée (P$_{cc}$, P'$_{cc}$).

Une autre information complémentaire utile pour choisir la pression de consigne à utiliser et donnée par le conducteur du véhicule peut être le domaine de vitesses d'utilisation projetée du véhicule.

De façon avantageuse, le système de contrôle de la pression des pneumatiques du véhicule comporte un mode de fonctionnement normal destiné à avertir le conducteur du véhicule lors d'un état anormal de l'un au moins des pneumatiques du véhicule et un mode de fonctionnement en assistance au regonflage et le basculement du mode de fonctionnement normal au mode de fonctionnement assistance au regonflage intervient lorsque le système reçoit une instruction de l'opérateur.

Lorsque le système est en mode contrôle et assistance au gonflage, les moyens d'analyse du système transmettent avantageusement aux moyens de dialogue avec le conducteur une information indiquant selon le cas une pression de gonflage trop élevée, une pression de gonflage trop basse ou une pression de gonflage correcte.

L'information pression de gonflage correcte est avantageusement transmise lorsque la pression de gonflage est comprise entre la pression de consigne corrigée et cette pression de consigne corrigée augmentée de 200 mbar.

Le procédé selon l'invention permet ainsi, au lieu de transmettre une alarme lors de variations fortes de température dans une même journée par exemple, de recommander un regonflage ou un dégonflage du pneumatique dès que la pression s'écarte faiblement de la pression de consigne corrigée.

Selon un mode de mise en oeuvre simple, le véhicule étant équipé de quatre pneumatiques, après basculement en mode contrôle et assistance au regonflage, le dispositif de contrôle transmet à l'opérateur une information sur l'état de gonflage des quatre pneumatiques du véhicule au moyen des lampes indicatrices de direction du véhicule :

- lampe éteinte : pression de gonflage correcte ;
- lampe allumée en continu : pression de gonflage insuffisante :
- lampe allumée clignotante : pression de gonflage trop élevée.

Cette indication transmise par les lampes indicatrices de direction du véhicule est particulièrement pratique lorsque le conducteur est en train d'effectuer une opération de gonflage dégonflage des ses pneumatiques.

Le dispositif de contrôle peut basculer en mode normal quand :

- il reçoit de l'opérateur une instruction de fin de regonflage ; ou
- le contact est coupé par l'opérateur ; ou
- lorsque la vitesse du véhicule devient supérieure à un seuil donné ; ou
- après un temps donné sans modification de pression de gonflage de l'un des pneumatiques ; ou
- après un temps maximum donné.

D'autres caractéristiques et avantages de l'invention apparaîtront au cours de la description suivante d'un mode de réalisation de l'invention donné à titre d'exemple en référence aux dessins annexés sur lesquels :

- la figure 1 présente schématiquement un dispositif pour mettre en oeuvre le procédé selon l'invention ; et
- la figure 2 est un organigramme d'un exemple de mise en oeuvre du procédé selon l'invention.

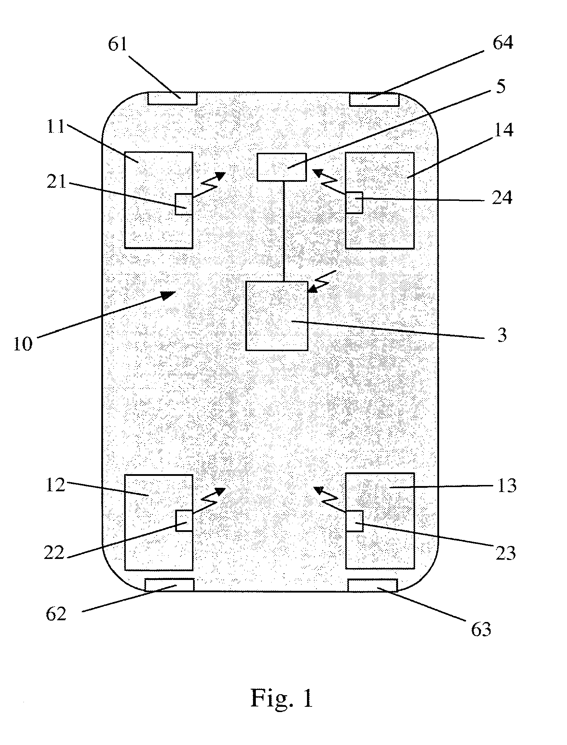

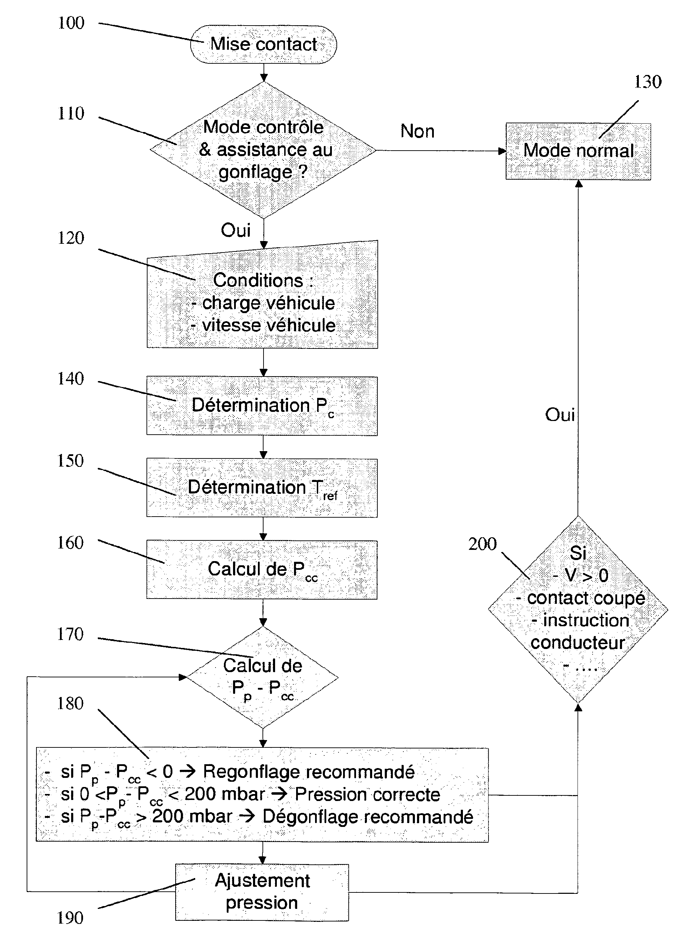

A la figure 1, on voit schématiquement un véhicule 1 équipé d'un système 10 de contrôle de la pression des pneumatiques. Ce véhicule comprend quatre pneumatiques 11, 12, 13 et 14. Le système 10 comprend pour chaque pneumatique 11, 12, 13 et 14 un module de roue 21, 22, 23, 24. Chaque module de roue comporte au moins un dispositif de mesure de la pression de gonflage du pneumatique et un dispositif de mesure de la température interne du fluide de gonflage du pneumatique ainsi qu'un émetteur radio. Les modules de roue sont disposés dans les cavités internes définies par les pneumatiques et les roues. Le système 10 comprend aussi une unité centrale 3 placée dans le véhicule. Cette unité centrale 3 comprend au moins un récepteur radio et des moyens d'analyse des mesures de pression et de température. Le système comprend aussi un afficheur 5 destiné à transmettre au conducteur du véhicule les informations élaborées par les moyens d'analyse du système. Cet afficheur comporte aussi des moyens de dialogue avec le conducteur, par exemple des boutons poussoir ou un écran tactile permettant de recevoir des informations du conducteur. Chaque module de roue 21, 22, 23 et 24 envoie régulièrement à l'unité centrale des mesures de pression et de température. Ces mesures sont traitées par les moyens d'analyse de l'unité centrale et le système transmet des informations ou des alarmes au conducteur selon le cas au moyen de l'afficheur 5. Le véhicule comprend aussi quatre indicateurs de direction 61, 62, 63 et 64.

La figure 2 présente un organigramme d'un exemple de mise en oeuvre du procédé selon l'invention.

A l'étape 100, le conducteur met le contact. Le système 10 est initialisé et l'afficheur 5 donne le choix entre le mode de contrôle et d'assistance au gonflage ou le mode normal (étape 110).

Si le conducteur transmet au système au moyen de l'afficheur 5 la commande « mode contrôle et assistance au gonflage », le système demande de choisir entre deux ou trois valeurs selon le cas la charge du véhicule (charge moyenne, pleine charge) et les conditions de vitesses d'utilisations (ville, autoroute) - étape 120.

Le système détermine la pression nominale $P_c$ appropriée aux conditions de charge et de vitesse indiquées à partir de données inscrites dans une mémoire des moyens d'analyse de l'unité centrale - étape 140.

A l'étape 150, le système détermine la température de référence $T_{ref}$ à partir des températures successivement mesurées lors des cinq derniers démarrages à froid du véhicule. Chaque température enregistrée peut être la moyenne des températures données par les quatre dispositifs de mesure de la température des modules de roues ou la température mesurée par le dispositif de mesure de la température extérieure du véhicule, s'il en est équipé. La température de référence est de préférence la valeur minimale des cinq dernières températures enregistrées lors de démarrages à froid. Cela veut dire que l'on prend en compte l'évolution de la température ambiante dans les derniers jours précédant le contrôle. On prend en compte la valeur minimale parce qu'il est préférable que les pneumatiques aient une pression de gonflage légèrement supérieure à la pression recommandée plutôt que légèrement inférieure.

A l'étape 160, la pression de consigne corrigée est calculée en prenant en compte la température de référence Trek et la température mesurée au moment du contrôle par le dispositif de mesure de la température du module de roue du pneumatique concerné. Cela permet de tenir compte de l'état chaud ou froid du pneumatique.

La pression de consigne $P_{cc}$ corrigée est donnée par la formule :

$$P_{cc} = P_c \cdot \frac{T_p}{T_{ref}}$$

dans laquelle $P_c$ est la valeur de consigne nominale de la pression de gonflage du pneumatique concerné, $T_p$ est la température du pneumatique fournie par le capteur de température, et $Tre_f$ est la température variable de référence ; les pressions $P_c$ et $P_{cc}$ étant en valeur absolue et les températures $T_p$ et $T_{ref}$ étant en degré K.

A l'étape 170, les moyens d'analyse de l'unité centrale 3 calculent :

$$P_p - P_{cc}$$

où $P_p$ est la pression mesurée au moment du contrôle par le dispositif de mesure de la pression du pneumatique concerné et $P_{cc}$ la pression de consigne corrigée.

Le système transmet alors au conducteur via l'afficheur 5 les informations suivantes (étape 180) :

- si $P_p - P_{cc} < 0$, regonflage recommandé ;

- si $0 < P_p - P_{cc} < 200$ mbar, pression correcte ;

- si $P_p - P_{cc} > 200$ mbar, dégonflage recommandé.

Il est à noter que le système 10 ne transmet pas au conducteur une alarme mais simplement une recommandation destinée à optimiser la pression de gonflage des pneumatiques et à limiter le nombre d'alarmes intempestives.
Si le conducteur effectue ce contrôle en vue d'un ajustement de la pression de ses pneumatiques, il est avantageux que le système transmette en même temps une indication compréhensible pour une personne placée à l'extérieur du véhicule. Une telle indication peut être transmise par les indicateurs de direction 61, 62, 63, 64 du véhicule. Chaque indicateur de direction est alors actionné selon le schéma indicatif suivant :

- lampe éteinte : pression de gonflage correcte ;
- lampe allumée en continu : pression de gonflage insuffisante ;
- lampe allumée clignotante : pression de gonflage trop élevée.

Ces indications sont complémentaires de celles transmises au conducteur via l'afficheur 5 et sont très utiles pour faciliter le gonflage à une pression correcte des pneumatiques.
Enfin, à l'étape 200, le système bascule en mode normal lorsque le conducteur fait avancer le véhicule, ou lorsque le contact est coupé, ou lorsque une instruction de quitter le mode contrôle et assistance au gonflage est transmise via l'afficheur 5, ou lorsqu'un temps donné s'est écoulé sans modification de pression de gonflage de l'un des pneumatiques, ou après un temps maximum donné.
Le procédé selon l'invention peut être mis en oeuvre à la demande du conducteur lorsqu'il est prêt à ajuster la pression des pneumatiques du véhicule mais aussi à chaque démarrage, voire à tout moment, lorsque le véhicule est à l'arrêt, pour obtenir une recommandation fine sur la pression de gonflage actuelle de ses pneumatiques.
Le mode de réalisation présenté ne l'a été qu'à titre d'exemple et de nombreuses modifications peuvent être apportées par l'homme de l'art sans pour autant sortir du cadre de l'invention défini par les revendications suivantes.

**Revendications**

1. Procédé de contrôle de la pression de gonflage et d'assistance au regonflage d'un pneumatique d'une roue d'un véhicule équipé d'un système propre au véhicule pour le contrôle de la pression de gonflage des pneumatiques comportant des dispositifs de détection de la pression et de la température des pneumatiques et des moyens d'analyse desdites valeurs de pression et de température, **caractérisé en ce que** les moyens d'analyse comparent la valeur actuelle de la pression de gonflage du pneumatique à une pression de consigne corrigée en fonction de la température du pneumatique fournie par le dispositif de détection de la température du pneumatique et correspondant à une température de référence fonction des températures mesurées lors des derniers démarrages dudit véhicule.

2. Procédé selon la revendication 1, dans lequel la pression de consigne corrigée est donnée par la formule :

$$P_{cc} = P_c \cdot \frac{T_p}{T_{ref}}$$

dans laquelle $P_c$ est la valeur de consigne nominale de la pression de gonflage du pneumatique concerné, $P_{cc}$ est ladite valeur de consigne corrigée pour la pression de gonflage, $T_p$ est la température du pneumatique fournie par le capteur de température, et $T_{ref}$ est la température variable de référence qui est choisie comme étant une température fonction des températures mesurées lors des derniers démarrages dudit véhicule ; les pressions $P_c$ et $P_{cc}$ étant en valeur absolue et les températures $T_p$ et $T_{ref}$ étant en degré K.

3. Procédé selon l'une des revendications 1 et 2, dans lequel la température fonction des températures mesurées lors des derniers démarrages dudit véhicule correspond à la température minimale parmi les n dernières températures mémorisées.

4. Procédé selon la revendication 3, dans lequel n est compris entre 3 et 10.

**5.** Procédé selon l'une des revendications 1 à 4, dans lequel chaque température mémorisée est la moyenne des températures mesurées par les dispositifs de détection de la température des pneumatiques du véhicule et dans lequel, chaque démarrage considéré est un démarrage dit « à froid ».

**6.** Procédé selon l'une des revendications 1 à 4, dans lequel, ledit véhicule étant équipé d'un capteur de température ambiante, chaque température mémorisée est fournie par ledit capteur de température ambiante.

**7.** Procédé selon l'une des revendications 1 à 6, dans lequel, le dispositif de contrôle de la pression de gonflage des pneumatiques comportant un dispositif de mesure de la pression atmosphérique, la valeur de consigne corrigée $P'_{cc}$, en valeur relative, est calculée par la formule :

$$P'_{cc} = (P'_c + P_{atm})[(t_p + 273)/(t_{ref} + 273)] - P_{atm}$$

dans laquelle $P'_c$ est ladite valeur de consigne, en valeur relative, pour la pression de gonflage, $P_{atm}$ est la valeur de la pression atmosphérique mesurée, $t_p$ et $t_{ref}$ sont ladite température du pneumatique et ladite température variable de référence en degrés C.

**8.** Procédé selon l'une des revendications 1 à 7, dans lequel, le système de contrôle de la pression comportant des moyens de dialogue avec le conducteur du véhicule, une information complémentaire est fournie par le conducteur aux moyens d'analyse indiquant l'état de charge du véhicule et dans lequel ladite information complémentaire est prise en compte pour définir la pression de consigne ($P_c$) pour la pression de gonflage à utiliser pour le calcul de la valeur de consigne corrigée ($P'_{cc}$).

**9.** Procédé selon l'une des revendications 1 à 8, dans lequel, le système de contrôle de la pression comportant des moyens de dialogue avec le conducteur du véhicule, une information complémentaire est fournie par le conducteur aux moyens d'analyse indiquant le domaine de vitesses d'utilisation du véhicule et dans lequel ladite information complémentaire est prise en compte pour définir la pression de consigne ($P_c$) pour la pression de gonflage à utiliser pour le calcul de la valeur de consigne corrigée ($P_{cc}$, $P'_{cc}$).

**10.** Procédé selon l'une des revendications 1 à 9, dans lequel, le système de contrôle de la pression des pneumatiques du véhicule comportant un mode de fonctionnement normal destiné à avertir le conducteur du véhicule lors d'un état anormal de l'un au moins des pneumatiques du véhicule et un mode de fonctionnement en contrôle et assistance au regonflage et des moyens de dialogue avec le conducteur, le basculement du mode de fonctionnement normal au mode de fonctionnement assistance au regonflage intervient lorsque le système reçoit une instruction du conducteur.

**11.** Procédé selon l'une des revendications 8 à 10, dans lequel les moyens d'analyse transmettent aux moyens de dialogue avec le conducteur une information indiquant respectivement une pression de gonflage trop élevée, une pression de gonflage trop basse ou bien une pression de gonflage correcte.

**12.** Procédé selon la revendication 11, dans lequel, le véhicule étant équipé de quatre pneumatiques, après basculement en mode contrôle et assistance au regonflage, le dispositif de contrôle transmet en outre une information sur l'état de gonflage des quatre pneumatiques du véhicule au moyen des lampes indicatrices de direction du véhicule :

- lampe éteinte : pression de gonflage correcte ;
- lampe allumée en continu : pression de gonflage insuffisante ;
- lampe allumée clignotante : pression de gonflage trop élevée.

**13.** Procédé selon l'une des revendications 10 à 12, dans lequel le dispositif de contrôle bascule en mode normal quand :

- il reçoit de l'opérateur une instruction de fin de regonflage ; ou
- le contact est coupé par le conducteur ; ou
- lorsque la vitesse du véhicule devient supérieure à un seuil donné ; ou
- après un temps donné sans modification de pression de gonflage de l'un des pneumatiques ; ou
- après un temps maximum donné.

**Claims**

1. A method for monitoring the inflation pressure and assisting the reinflation of a tire of a wheel of a vehicle equipped with a system specific to the vehicle for monitoring the inflation pressure of the tires comprising devices for detecting the pressure and temperature of the tires and means for analyzing said pressure and temperature values, **characterized in that** the analysis means compare the current value of the inflation pressure of the tire with a setpoint pressure that is corrected as a function of the tire temperature provided by the device for detecting the temperature of the tire and corresponding to a reference temperature dependent on the temperatures measured during the most recent starts of said vehicle.

2. The method as claimed in claim 1, in which the corrected setpoint pressure is given by the formula:

$$P_{cc} = P_c \cdot \frac{T_p}{T_{ref}}$$

in which $P_c$ is the nominal setpoint value of the inflation pressure of the tire concerned, $P_{cc}$ is said corrected setpoint value for the inflation pressure, $T_p$ is the tire temperature provided by the temperature sensor, and $T_{ref}$ is the variable reference temperature which is chosen as being a temperature dependent on the temperatures measured during the most recent starts of said vehicle; the pressures $P_c$ and $P_{cc}$ being absolute values and the temperatures $T_p$ and $T_{ref}$ being degrees K.

3. The method as claimed in one of claims 1 and 2, in which the temperature dependent on the temperatures measured during the most recent starts of said vehicle corresponds to the minimum temperature out of the n most recent stored temperatures.

4. The method as claimed in claim 3, in which n lies between 3 and 10.

5. The method as claimed in one of claims 1 to 4, in which each stored temperature is the average of the temperatures measured by the devices for detecting the temperature of the tires of the vehicle and in which each start considered is a so-called "cold" start.

6. The method as claimed in one of claims 1 to 4, in which, said vehicle being equipped with an ambient temperature sensor, each stored temperature is provided by said ambient temperature sensor.

7. The method as claimed in one of claims 1 to 6, in which, the device for monitoring the inflation pressure of the tires comprising a device for measuring the atmospheric pressure, the corrected setpoint value $P'_{cc}$, as a relative value, is calculated via the formula:

$$P'_{cc} = (P'_c + P_{atm})[(t_p + 273)/(t_{ref} + 273)] - P_{atm}$$

in which $P'_c$, is said setpoint value, as a relative value, for the inflation pressure, $P_{atm}$ is the value of the measured atmospheric pressure, $t_p$ and $t_{ref}$ are said temperature of the tire and said variable reference temperature in degrees C.

8. The method as claimed in one of claims 1 to 7, in which, the system for monitoring the pressure comprising means for dialoguing with the driver of the vehicle, complementary information is provided by the driver to the analysis means indicating the load state of the vehicle and in which said complementary information is taken into account to define the setpoint pressure ($P_c$) for the inflation pressure to be used in calculating the corrected setpoint value ($P'_{cc}$).

9. The method as claimed in one of claims 1 to 8, in which, the system for monitoring the pressure comprising means for dialoguing with the driver of the vehicle, complementary information is provided by the driver to the analysis means indicating the range of speeds of use of the vehicle and in which said complementary information is taken into account to define the setpoint pressure ($P_c$) for the inflation pressure to be used in calculating the corrected setpoint value ($P_{cc}$, $P'_{cc}$).

10. The method as claimed in one of claims 1 to 9, in which, the system for monitoring the pressure of the tires of the vehicle comprising a normal operating mode intended to warn the driver of the vehicle during an abnormal state of one at least of the tires of the vehicle and a monitoring and reinflation assistance operating mode and means for dialoguing with the driver, the switchover from the normal operating mode to the reinflation assistance operating mode occurs when the system receives a driver instruction.

11. The method as claimed in one of claims 8 to 10, in which the analysis means transmit, to the means for dialoguing with the driver, information indicating respectively too high an inflation pressure, too low an inflation pressure or else a correct inflation pressure.

12. The method as claimed in claim 11, in which, the vehicle being equipped with four tires, after switchover to monitoring and reinflation assistance mode, the monitoring device furthermore transmits information about the inflation state of the four tires of the vehicle by means of the direction indicator lamps of the vehicle:

- lamp off: inflation pressure correct;
- lamp on continuously: inflation pressure insufficient;
- lamp on flashing: inflation pressure too high.

13. The method as claimed in one of claims 10 to 12, in which the monitoring device switches over to normal mode when:

- it receives an end-of-reinflation instruction from the operator; or
- the driver switches off; or
- when the speed of the vehicle becomes greater than a given threshold; or
- after a given time without modification of inflation pressure of one of the tires; or
- after a given maximum time.

**Patentansprüche**

1. Verfahren zur Überwachung des Fülldrucks und zur Unterstützung beim Nachfüllen eines Luftreifens eines Rads eines Fahrzeugs, das mit einem dem Fahrzeug eigenen System zur Überwachung des Fülldrucks der Luftreifen ausgestattet ist, das Vorrichtungen zur Erfassung des Drucks und der Temperatur der Luftreifen und Einrichtungen zur Analyse der Druck- und Temperaturwerte aufweist, **dadurch gekennzeichnet, dass** die Analyseeinrichtungen den aktuellen Wert des Fülldrucks des Luftreifens mit einem Solldruck vergleichen, der abhängig von der Temperatur des Luftreifens korrigiert wird, die von der Vorrichtung zur Erfassung der Temperatur des Luftreifens geliefert wird und einer Bezugstemperatur entspricht, die von den Temperaturen abhängt, die bei den letzten Starts des Fahrzeugs gemessen wurden.

2. Verfahren nach Anspruch 1, bei dem der korrigierte Solldruck von der Formel:

$$P_{CC} = P_C \cdot \frac{T_p}{T_{ref}}$$

angegeben wird, in der $P_c$ der Nennsollwert des Fülldrucks des betroffenen Luftreifens ist, $P_{cc}$ der korrigierte Sollwert für den Fülldruck ist, $T_p$ die vom Temperaturfühler gelieferte Temperatur des Luftreifens und $T_{ref}$ die variable Bezugstemperatur ist, die als eine von den bei den letzten Starts des Fahrzeugs gemessenen Temperaturen abhängige Temperatur gewählt wird; wobei die Drücke $P_c$ und $P_{cc}$ im Absolutwert und die Temperaturen $T_p$ und $T_{ref}$ in Grad K ausgedrückt sind.

3. Verfahren nach einem der Ansprüche 1 und 2, bei dem die von den bei den letzten Starts des Fahrzeugs gemessenen Temperaturen abhängige Temperatur der minimalen Temperatur unter den n letzten gespeicherten Temperaturen entspricht.

4. Verfahren nach Anspruch 3, bei dem n zwischen 3 und 10 liegt.

9

**5.** Verfahren nach einem der Ansprüche 1 bis 4, bei dem jede gespeicherte Temperatur der Mittelwert der von den Erfassungsvorrichtungen der Temperatur des Luftreifens des Fahrzeugs gemessenen Temperaturen ist, und bei dem jeder betrachtete Start ein so genannter "Kaltstart" ist.

**6.** Verfahren nach einem der Ansprüche 1 bis 4, bei dem, wenn das Fahrzeug mit einem Umgebungstemperaturfühler ausgestattet ist, jede gespeicherte Temperatur von dem Umgebungstemperaturfühler geliefert wird.

**7.** Verfahren nach einem der Ansprüche 1 bis 6, bei dem, wenn die Überwachungsvorrichtung des Fülldrucks der Luftreifen eine Vorrichtung zur Messung des Atmosphärendrucks aufweist, der korrigierte Sollwert $P'_{cc}$, im Relativwert, durch die Formel:

$$P'_{cc} = (P'_c + P_{atm})[(t_p + 273)/(t_{ref} + 273)] - P_{atm}$$

berechnet wird, bei der $P'_c$ der Sollwert, im Relativwert, für den Fülldruck ist, $P_{atm}$ der gemessene Wert des Atmosphärendrucks ist, $t_p$ und $t_{ref}$ die Temperatur des Luftreifens und die variable Bezugstemperatur in Grad C ausgedrückt sind.

**8.** Verfahren nach einem der Ansprüche 1 bis 7, bei dem, wenn das Überwachungssystem des Drucks Dialogeinrichtungen mit dem Fahrer des Fahrzeugs aufweist, eine komplementäre Information vom Fahrer an die Analyseeinrichtungen geliefert wird, die den Ladezustand des Fahrzeugs angibt, und bei dem die komplementäre Information berücksichtigt wird, um den Solldruck ($P_c$) für den Fülldruck zu definieren, der für die Berechnung des korrigierten Sollwerts ($P'_{cc}$) zu verwenden ist.

**9.** Verfahren nach einem der Ansprüche 1 bis 8, bei dem, wenn das Überwachungssystem des Drucks Dialogeinrichtungen mit dem Fahrer des Fahrzeugs aufweist, eine komplementäre Information vom Fahrer an die Analyseeinrichtungen geliefert wird, die den Nutzgeschwindigkeitsbereich des Fahrzeugs angibt, und bei dem die komplementäre Information berücksichtigt wird, um den Solldruck ($P_c$) für den Fülldruck zu definieren, der für die Berechnung des korrigierten Sollwerts ($P_{cc}$, $P'_{cc}$) zu verwenden ist.

**10.** Verfahren nach einem der Ansprüche 1 bis 9, bei dem, wenn das Überwachungssystem des Drucks der Luftreifen des Fahrzeugs eine normale Betriebsart, die dazu bestimmt ist, den Fahrer des Fahrzeugs bei einem anormalen Zustand mindestens eines der Luftreifens zu warnen, und eine Betriebsart der Überwachung und Unterstützung des Nachfüllens und Dialogeinrichtungen mit dem Fahrer aufweist, das Umschalten von der normalen Betriebsart in die Betriebsart Unterstützung des Nachfüllens erfolgt, wenn das System eine Anweisung vom Fahrer empfängt.

**11.** Verfahren nach einem der Ansprüche 8 bis 10, bei dem die Analyseeinrichtungen an die Dialogeinrichtungen mit dem Fahrer eine Information übertragen, die einen zu hohen Fülldruck, einen zu niedrigen Fülldruck bzw. einen korrekten Fülldruck anzeigt.

**12.** Verfahren nach Anspruch 11, bei dem, wenn das Fahrzeug mit vier Luftreifen ausgestattet ist, nach dem Umschalten in die Betriebsart Überwachung und Unterstützung des Nachfüllens die Überwachungsvorrichtung außerdem eine Information über den Füllzustand der vier Luftreifen des Fahrzeugs mittels Richtungsanzeigelampen des Fahrzeugs überträgt:

- Lampe aus: Fülldruck korrekt;
- Lampe kontinuierlich eingeschaltet: Fülldruck unzureichend;
- Lampe blinkend eingeschaltet: Fülldruck zu hoch.

**13.** Verfahren nach einem der Ansprüche 10 bis 12, bei dem die Überwachungsvorrichtung in die normale Betriebsart umschaltet, wenn:

- sie vom Bediener eine Anweisung des Endes des Nachfüllens empfängt; oder
- der Kontakt vom Fahrer unterbrochen wird; oder
- wenn die Geschwindigkeit des Fahrzeugs höher als ein gegebener Schwellwert wird; oder
- nach einer gegebenen Zeit ohne Veränderung des Fülldrucks eines der Luftreifen; oder

- nach einer gegebenen maximalen Zeit.

Fig. 1

100 → **Mise contact**

110 → **Mode contrôle & assistance au gonflage ?** — Non → 130 **Mode normal**

Oui

120 → **Conditions :**
- charge véhicule
- vitesse véhicule

140 → **Détermination $P_c$**

150 → **Détermination $T_{ref}$**

160 → **Calcul de $P_{cc}$**

170 → **Calcul de $P_p - P_{cc}$**

180 →
- si $P_p - P_{cc} < 0$ → Regonflage recommandé
- si $0 < P_p - P_{cc} < 200$ mbar → Pression correcte
- si $P_p - P_{cc} > 200$ mbar → Dégonflage recommandé

190 → **Ajustement pression**

200 → **Si**
- $V > 0$
- contact coupé
- instruction conducteur
- ....

Oui

**EP 1 879 756 B1**

**RÉFÉRENCES CITÉES DANS LA DESCRIPTION**

**Documents brevets cités dans la description**

- WO 0234551 A
- WO 0234552 A
- WO 0234553 A
- GB 2406947 A
- JP 2005008109 A